# EUROPÄISCHE PATENTSCHRIFT

(11) **EP 2 167 562 B1**
(45) Veröffentlichungstag und Bekanntmachung des Hinweises auf die Patenterteilung: **12.10.2011**
(21) Anmeldenummer: 08784580.6
(22) Anmeldetag: 01.07.2008
(51) Int. Cl.: C08G 18/10, C08G 18/48, C08G 18/71

(54) **VERFAHREN ZUR HERSTELLUNG VON POLYURETHAN-SCHÄUMEN AUF BASIS VON SPEZIELLEN ALKOXYSILANFUNKTIONELLEN POLYMEREN**
PROCESS FOR PRODUCING POLYURETHANE FOAMS BASED ON SPECIFIC ALKOXYSILANE-FUNCTIONAL POLYMERS
PROCÉDÉ DE FABRICATION DE MOUSSES DE POLYURÉTHANNE À BASE DE POLYMÈRES SPÉCIAUX À FONCTION ALCOXYSILANE

(30) Priorität: 11.07.2007 DE 102007032342
(43) Veröffentlichungstag der Anmeldung: 31.03.2010
(73) Patentinhaber: Bayer MaterialScience AG, 51368 Leverkusen (DE)
(72) Erfinder: MATNER, Mathias, 41464 Neuss (DE); MAGER, Michael, 51375 Leverkusen (DE); LUDEWIG, Michael, 51373 Leverkusen (DE)
(86) Internationale Anmeldenummer: PCT/EP2008/005351
(87) Internationale Veröffentlichungsnummer: WO 2009/007038

(56) Entgegenhaltungen:
- WO-A-02/066532
- WO-A-2004/022618
- WO-A-2007/037824
- WO-A-2007/050426
- DE-A1- 19 653 388

## Beschreibung

Die vorliegende Erfindung betrifft ein Verfahren zur Herstellung von besonders einfach aufzuschäumenden und schnell härtenden Polyurethan-Schäumen auf Basis von mit Isocyanatosilanen modifizierten Polyethern, die ein mittleres Molekulargewicht (Mn) zwischen 2000 und 8000g/mol aufweisen und die neben dem Hauptbestandteil Polypropylenoxid auch einen Anteil von 10-35 Gewichts-% an Polyethylenoxid aufweisen.

Die Herstellung von Polyurethanschäumen auf Basis von alkoxysilanteminierten Prepolymeren ist bekannt. So ist z.B. in der EP 946 629 B1 grundsätzlich eine Schaumformulierung beschrieben, die als Bindemittel ein silanfunktionelles Prepolymer enthält. Allerdings lassen sich solche hochmolekularen, nur auf Polypropylenoxid basierenden Prepolymere nicht besonders leicht aufschäumen und bedürfen zu diesem Zweck entweder spezieller aufwändiger Applikationsgeräte (z.B. FoamMix® der Firma Nordson) oder aber, wie in der Patentschrift dargelegt, aufwändiger Formulierungen mit vielen Additiven, die u.a. die Viskosität des Systems deutlich herabsetzen. In der Patentschrift werden zwar Ethylenoxid-haltige Polyether als mögliche Einsatzstoffe erwähnt, die besondere Eignung dieser Rohstoffe wurde aber verkannt.

Die EP 1 098 920 beschreibt ein ähnliches System auf Basis eines deutlich niedermolekulareren silanterminierten Polyurethans. Derartig niedermolekulare silanterminierte Prepolymere enthalten aber hohe Mengen an recht teuren funktionellen Silanen, was auch zu einer deutlich verlängerten Aushärtegeschwindigkeit führt (etwa 24 Stunden, laut Beispiel 2 und 3).

Dieses Problem der nur geringen Aushärtegeschwindigkeit wurde in der WO 2002/066532 adressiert, indem alkoxisilanterminierten Polyurethane verwendet wurden, die mit alpha-Amino-oder alpha-Isocyanatosilanen hergestellt wurden. Die Verwendung solcher Bausteine, die aufgrund ihres C-1-Spacers zwischen Silan und funktioneller Gruppe besonders reaktiv sind, ist allerdings eben aufgrund dieser hohen Reaktivität recht aufwändig, da vorzeitige Aushärtung und Nebenreaktionen vermieden werden müssen, was einen hohen Anspruch an Reinheit und Wasserfreiheit der Formulierungsingredienzien stellt und auch spezielle und teure Additive notwendig macht. Varianten dieses Konzeptes sind in der WO 2004/092259 und der WO 2004/104078 beschrieben.

In der DE 2238741, wie auch in der WO 2004/046218 sind silanterminierte polymere Isocyanate beschrieben, die sich zur Herstellung von Hartschäumen eignen. Nachteilig ist aber auch hier die notwendige erhebliche Menge an teuren funktionellen Silanen, die eine nur langsame Aushärtung verursachen.

Es war daher die Aufgabe der vorliegenden Erfindung, schnell härtende und besonders einfach aufzuschäumende silanvernetzende Polyurethan-Schäume zur Verfügung zu stellen.

Ausgehend von der EP 946 629 B1 konnte diese Aufgabe überraschenderweise durch die Verwendung von mit Isocyanatosilanen modifizierten Polyethern, welchen Polyether zugrunde liegen, die ein mittleres Molekulargewicht (Mn) zwischen 2000 und 8000g/mol aufweisen und die neben dem Hauptbestandteil Polypropylenoxid auch einen Anteil von 10-30 Gewichts-% an Polyethylenoxid aufweisen, als Bindemittel für Polyurethanschaum-Formulierungen gelöst werden.

Gegenstand der Erfindung ist daher ein Verfahren zur Herstellung von durch Silankondensation härtenden Polyurethan-Schäumen, bei dem man eine Zusammensetzung, die mindestens ein silanterminiertes Polyurethan-Prepolymer enthält,
das erhältlich ist, indem man
A) wenigstens einen Polyether mit einem mittleren Molekulargewicht (Mn) von 2000 bis 8000g/mol, enthaltend 10 bis 30 Gewichts-% EO-Einheiten bezogen auf alle im Polyether enthaltenen Alkylenoxydeinheiten, mit
B) wenigstens einer isocyanat- und alkoxysilangruppenaufweisenden Verbindung der Formel (I) 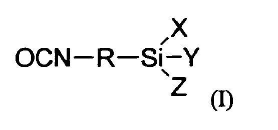 in welcher
   X, Y, Z unabhängig voneinander C₁-C₈-Alkyl- oder C₁-C₈-Alkoxyreste sind, wobei mindestens einer der Reste eine C₁-C₈-Alkoxygruppe ist und
   R ein beliebiger wenigstens difunktioneller organischer Rest ist, bevorzugt ein Alkylenradikal mit 1 bis 8 Kohlenstoffatomen,
   umsetzt,
   aufschäumt, gegebenenfalls vor, während oder nach dem Aufschäumen auf ein geeignetes Substrat aufträgt und in Anwesenheit von Wasser aushärtet.

Ein weiterer Gegenstand der vorliegenden Erfindung sind die nach dem erfindungsgemäßen Verfahren erhältlichen Schäume.

Die für das erfindungsgemäße Verfahren notwendigen silanterminierten Polyurethane werden erhalten, indem man ein spezielles Polyetherpolyol mit einem Isocyanatosilan umsetzt.

Erfindungswesentlich ist die Auswahl des Polyetherpolyols A). Geeignete Polyetherpolyole haben ein Molekulargewicht (Mn) von 2000g/mol bis 8000g/mol, vorzugsweise von 3000g/mol bis 5000g/mol und sind die an sich bekannten Additionsprodukte von Propylenoxid und Ethylenoxid auf ein Startermolekül. Die erfindungsgemäß verwendbaren Polyetherpolyole haben dabei einen Anteil von 10-30 Gewichts-%, vorzugsweise 10-20 Gewichts-% an einpolymerisierten Polyethylenoxid bezogen auf den Gesamtanteil an Alkylenoxid im Polyether. Es spielt dabei keine Rolle, ob das Ethylenoxid zufällig-verteilt, oder blockweise im Polyether enthalten ist, wobei die Verteilung in Blöcken aber bevorzugt ist. Insbesondere ist es bevorzugt, wenn das Ethylenoxid als Endblock auf ein Polypropylenoxid polymerisiert ist.

Die Alkoxylierung mit Ethylenoxid bzw. Propylenoxid kann dabei unter Basenkatalyse oder unter Einsatz von Doppelmetallcyanidverbindungen (DMC-Verbindungen) erfolgen.

Als geeignete Startermoleküle der Herstellung der Polyetherpolyole können alle dem Stand der Technik nach bekannten Verbindungen eingesetzt werden, wie zum Beispiel Wasser, Butyldiglykol, Glycerin, Diethylenglykol, Trimethylolpropan, Propylenglykol, Sorbit, Ethylendiamin, Triethanolamin, 1,4-Butandiol. Bevorzugte Startermoleküle sind Wasser, Ethylenglykol, Propylenglykol, 1,4-Butandiol, Diethylenglykol und Butyldiglykol.

Als isocyanat- und alkoxysilangruppenaufweisende Verbindungen B) sind grundsätzlich alle alkoxysilangruppenhaltigen Monoisocyanate mit einem Molekulargewicht von 140 g/mol bis 500 g/mol geeignet. Bei solchen Molekülen der Formel (I) 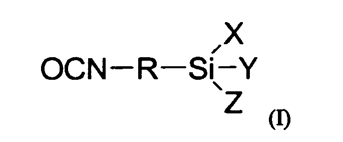 bedeuten X, Y und Z unabhängig voneinander C₁-C₈-Alkyl- oder C₁-C₈-Alkoxyreste, bevorzugt C₁-C₄-Alkyl- oder C₁-C₄-Alkoxyreste und ganz besonders bevorzugt Methyl- und Ethyl- oder Methoxy- und Ethoxyreste, wobei mindestens einer, bevorzugt mindestens zwei der Reste eine Alkoxygruppe ist. Es ist aber auch denkbar, cyclische Alkoxysilane einzusetzen, bei denen X und Y über einen Dialkoxyrest miteinander verbrückt sind.

R steht für einen beliebigen wenigstens difunktionellen organischer Rest, bevorzugt für ein Alkylenradikal mit 1 bis 8 Kohlenstoffatomen und ganz besonders bevorzugt für einen n-Propyl-Rest.

Solche Isocyanat- aufweisende Di- und/oder Trialkoxysilane sind grundsätzlich bekannt, als Beispiele genannt seien Isocyanatomethyltrimethoxysilan, Isocyanatomethyltriethoxysilan, (Isocyanatomethyl)methyldimethoxysilan, (Isocyanatomethyl)methyldiethoxysilan, 3-Isocyanatopropyltrimethoxysilan, 3-Isocyanatopropylmethyldimethoxysilan, 3-Isocyanatopropyltriethoxysilan und 3-Isocyanatopropylmethyldiethoxysilan. Bevorzugt ist hier die Verwendung von 3-Isocyanatopropyltrimethoxysilan.

Bei Herstellung des im erfindungsgemäßen Verfahren verwendeten silanterminierten Polyurethan-Prepolymers durch Urethanisierung werden pro Äquivalent der isocyanat- und alkoxysilangruppenaufweisenden Verbindung (B) 1,0 bis 1,5 Äquivalente, vorzugsweise 1,0 bis 1,2 Äquivalente, des Polyethers (A) verwendet.

Die Urethanisierung der Komponenten A) und B) kann gegebenenfalls mit einem Katalysator durchgeführt werden. Als solche katalytisch wirksame Verbindungen kommen dem Fachmann an sich bekannte Urethanisierungskatalysatoren wie Organozinnverbindungen oder aminische Katalysatoren in Frage. Als Organozinnverbindungen seien beispielhaft genannt: Dibutylzinndiacetat, Dibutylzinndilaurat, Dibutylzinn-bis-acetoacetonat und Zinncarboxylate wie beispielsweise Zinnoctoat. Die genannten Zinnkatalysatoren können gegebenenfalls in Kombination mit aminischen Katalysatoren wie Aminosilanen oder 1,4-Diazabicyclo[2.2.2]octan verwendet werden.

Besonders bevorzugt wird Dibutylzinndilaurat als Urethanisierungskatalysator eingesetzt.

Im erfindungsgemäßen Verfahren wird die Katalysatorkomponente sofern mitverwendet in Mengen von 0,001 bis 5,0 Gew.-%, bevorzugt 0,001 bis 0,1 Gew.-% und besonders bevorzugt 0,005 bis 0,05 Gew.-% bezogen auf Festgehalt des Verfahrensprodukts eingesetzt.

Die Urethanisierung der Komponenten A) und B) wird bei Temperaturen von 20 bis 200°C, bevorzugt 40 bis 120°C und besonders bevorzugt von 60 bis 100°C durchgeführt.

Die Reaktion wird fortgeführt, bis ein vollständiger Umsatz der NCO-Gruppen der Verbindungen der Komponente B) erreicht ist. Der Verlauf der Reaktion kann durch geeignete im Reaktionsgefäß installierte Messgeräte und/oder anhand von Analysen an entnommenen Proben verfolgt werden. Geeignete Verfahren sind dem Fachmann bekannt. Es handelt sich beispielsweise um Viskositätsmessungen, Messungen des NCO-Gehalts, des Brechungsindex, des OH-Gehalts, Gaschromatographie (GC), kemmagnetische Resonanzspektroskopie (NMR), Infrarotspektroskopie (IR) und nahe Nahinfrarotspektroskopie (NIR). Vorzugsweise wird der NCO-Gehalt der Mischung titrimetrisch bestimmt.

Für das erfindungsgemäße Verfahren werden neben dem Bindemittel in der Regel auch weitere Formulierungsbestandteile, wie Additive, Katalysatoren, Weichmacher, Treibmittel und Hilfssowie Zusatzstoffe verwendet.

Die Additive sind nichtionische, anionische, kationische oder zwitterionische Tenside oder Mischungen der genannten Tenside, welche in den erfindungsgemäßen Zusammensetzungen der Verbesserung der Schaumbildung, der Schaumstabilität oder der Eigenschaften des resultierenden Polyurethan-Schaums dienen. Bevorzugte Additive sind nichtionische, besonders bevorzugt nichtionische Tenside auf Basis von Polyethersiloxanen.

Als Katalysatoren können grundsätzlich alle aus der Siliziumchemie an sich bekannten Stoffe zugesetzt werden, welche die Hydrolyse und Kondensation von Alkoxysilanen bzw. Silanolgruppen katalysieren. Genannt seien beispielsweise Metallsalze, Metallkomplexe, metallorganische Verbindungen, sowie Säuren und Basen. Bevorzugt ist die Verwendung von organischen und anorganischen Säuren oder Basen, besonders bevorzugt die Verwendung organischer oder anorganischer Säuren wie beispielsweise Salzsäure oder p-Toluolsulfonsäure.

Die Vernetzungsreaktion der Alkoxysilangruppen der silanterminierten Polyurethan-Prepolymere unter Bildung von Siloxanbrücken kann grundsätzlich in Gegenwart von Luftfeuchte erfolgen, jedoch ist der Zusatz von Wasser zur erfindungsgemäßen Zusammensetzung bevorzugt. Wird zusätzlich ein Katalysator eingesetzt, so wird dieser bevorzugt im zuzusetzenden Wasser gelöst eingesetzt.

Als Treibmittel kann im einfachsten Falle Luft oder Stickstoff eingesetzt werden, jedoch können selbstverständlich auch alle anderen, aus der Polyurethanchemie an sich bekannten, Treibmittel zum Aufschäumen der erfindungsgemäßen Zusammensetzung eingesetzt werden. Genannt seien beispielsweise n-Butan, i-Butan, Propan und Dimethylether, sowie Mischungen der vorgenannten.

Als Hilfs- und Zusatzstoffe können beispielsweise Verdicker bzw. Thixotropiermittel, Antioxidantien, Lichtschutzmittel, Weichmacher, Pigmente, Füllstoffe und/oder Verlaufshilfsmittel eingesetzt werden.

Bevorzugte Hilfs- und Zusatzstoffe sind Füllstoffe, besonders bevorzugt anorganische Füllstoffe, welche zu einer Verbesserung der mechanischen Eigenschaften des erfindungsgemäßen Polyurethan-Schaums beitragen können. Geeignet sind beispielsweise Kreiden und hochdisperse Kieselsäuren, insbesondere flammpyrolytisch hergestellte Kieselsäuren.

Als Weichmacher können alle natürliche oder synthetischen Stoffe eingesetzt werden, welche mit dem Polyurethan-Schaum eine genügend gute Verträglichkeit zeigen. Beispiele geeigneter Weichmacher sind Campher, Ester (aliphatischer) Dicarbonsäuren, z.B. der Adipinsäure, Polyester, insbesondere auf Basis von Adipin-, Sebacin-, Azelain und Phthalsäure kondensiert mit 1,3-Butandiol, 1,4-Butandiol oder 1,6-Hexandiol, sowie Phosphorsäureester, Fettsäureester und Hydroxycarbonsäureester (z.B. auf Basis von Zitronensäure, Weinsäure oder Milchsäure).

Die erfindungsgemäßen Zusammensetzungen enthalten, bezogen auf Trockensubstanz, typischerweise 30 bis 99,9 Gewichtsteile des silanterminierten Polyurethan-Prepolymers, 0,1 bis 20 Gewichtsteile des (Schaum-) Additivs und 0 bis 50 Gewichtsteile weiterer Hilfs- und Zusatzstoffe, insbesondere Füllstoffe und Weichmacher. Bevorzugt enthalten die Zusammensetzungen, bezogen auf Trockensubstanz, 50 bis 99,9 Gewichtsteile des silanterminierten Polyurethan-Prepolymers, 0,1 bis 15 Gewichtsteile des (Schaum-) Additivs und 10 bis 40 Gewichtsteile Hilfs- und Zusatzstoffe, insbesondere Füllstoffe und Weichmacher.

Das Treibmittel oder das Treibmittelgemisch wird typischerweise in einer Menge von 1 bis 50 Gew.-%, bevorzugt 5 bis 40 Gew.-% und besonders bevorzugt 5 bis 20 Gew.% eingesetzt, wobei die Summe der eingesetzten Komponenten 100 Gew.-% ergibt.

Das Mischen der Komponenten kann in beliebiger Reihenfolge erfolgen.

Wasser wird typischerweise in einer Menge zugegeben, dass das Molverhältnis von Alkoxysilangruppen zu Wasser kleiner oder gleich 1 ist (Überschuss Wasser). Bevorzugt ist das Molverhältnis kleiner oder gleich 0,75, besonders bevorzugt kleiner oder gleich 0,55.

Das Aufschäumen im erfindungsgemäßen Verfahren geschieht durch Schütteln der Zusammensetzung, mechanisches Rühren bei hohen Drehzahlen oder durch Entspannung eines Treibgases. Nach oder während des Aufschäumens, erfolgt die Aushärtung der Zusammensetzung, wonach der gewünschte Polyurethan-Schaum erhalten wird. Vor der vollständigen Aushärtung, d.h. solange die Zusammensetzung noch fließfähig ist, kann diese durch gängige Applikationstechniken wie Gießen oder Rakeln auf ein geeignetes Substrat aufgebracht werden.

Das mechanische Aufschäumen kann mit beliebigen mechanischen Rühr-, Misch- und Dispergiertechniken erfolgen. In der Regel wird hierbei Luft eingetragen, aber auch Stickstoff und andere Gase können hierfür benutzt werden.

Der so erhaltene Schaum wird beim Aufschäumen oder unmittelbar danach auf ein Substrat aufgetragen oder in eine Form gegeben und getrocknet.

Der Auftrag kann beispielsweise durch Gießen oder Rakeln erfolgen, aber auch andere an sich bekannte Techniken sind möglich. Ein mehrschichtiger Auftrag mit gegebenenfalls zwischengeschalteten Aushärtungsschritten ist grundsätzlich auch möglich.

Eine befriedigende Aushärtungsgeschwindigkeit der Schäume wird bereits bei 20°C beobachtet. Für eine schnellere Aushärtung und Fixierung der Schäume können jedoch auch höhere Temperaturen von bevorzugt mehr als 30°C angewandt werden, z.B. unter Zuhilfenahme von an sich bekannten Heiz- und Trockenapparaten, wie (Umluft-) Trockenschränken, Heißluft oder IR-Strahlem.

Der Auftrag sowie die Aushärtung können jeweils diskontinuierlich oder kontinuierlich durchgeführt werden, bevorzugt ist jedoch ein gänzlich kontinuierliches Verfahren

In einer Ausführungsform der vorliegenden Erfindung wird das silanterminierte Polyurethan-Prepolymer mit dem Additiv und gegebenenfalls weiteren Hilfs- und Zusatzstoffen gemischt. Nach dem Aufschäumen der Mischung, was beispielsweise durch mechanischen Eintrag von Luft oder eines anderen Gases erfolgen kann, wird der Katalysator zugegeben, die (geschäumte) Mischung auf ein geeignetes Substrat aufgetragen und schließlich in Gegenwart von Luftfeuchte ausgehärtet. Um die Aushärtung der geschäumten Mischung zu beschleunigen, kann überdies Wasser zugegeben werden, was vorzugsweise zusammen mit dem (gelösten) Katalysator erfolgt.

In einer weiteren Ausführungsform der vorliegenden Erfindung wird das silanterminierte Polyurethan-Prepolymer mit dem Additiv und gegebenenfalls weiteren Hilfs- und Zusatzstoffen gemischt und in einen geeigneten Druckbehälter, z.B. eine Sprühdose, überführt. Danach wird das Treibmittel zugegeben; während der Applikation der Mischung auf ein geeignetes Substrat erfolgt das Aufschäumen und die Aushärtung durch Luftfeuchte.

In einer weiteren Ausführungsform der vorliegenden Erfindung wird das silanterminierte Polyurethan-Prepolymer mit dem Additiv und gegebenenfalls weiteren Hilfs- und Zusatzstoffen gemischt und in eine erste Kammer eines geeigneten Druckbehälters, z.B. eine Sprühdose, überführt, wobei der Drückbehälter über mindestens 2 getrennte Kammern verfügt. In eine zweite Kammer des Druckbehälters wird der Katalysator gegeben, welcher bevorzugt mit einer geeigneten Menge Wasser vermischt ist. Die Hilfs- und Zusatzstoffe können auch in der zweiten Kammer zugemischt werden, dies ist jedoch weniger bevorzugt. Nun wird das Treibmittel zu einer oder beiden der Kammern zugegeben und schließlich erfolgt die Applikation der Zweikomponentenmischung auf ein geeignetes Substrat, wobei gleichzeitig das Aufschäumen sowie die Aushärtung erfolgt.

Die Polyurethan-Schäume haben vor ihrer Aushärtung typischerweise Schaumdichten von 50 bis 800 g/Liter, bevorzugt 100 bis 500 g/Liter, besonders bevorzugt 100 bis 250 g/Liter (Masse aller Einsatzstoffe [in g] bezogen auf das Schaumvolumen von einem Liter).

Die Polyurethan-Schäume besitzen nach ihrer Trocknung eine mikroporöse, zumindest teilweise offenporige Struktur mit miteinander kommunizierenden Zellen. Die Dichte der ausgehärteten Schäume liegt dabei typischerweise unterhalb von 0,4 g/cm³, bevorzugt ist sie geringer als 0,35 g/cm³ und liegt besonders bevorzugt bei 0,01 bis 0,2 g/cm³.

Die Polyurethan-Schäume weisen eine gute mechanische Festigkeit und hohe Elastizität auf. Typischerweise sind die Werte für die maximale Spannung größer als 0,1 N/mm² und die maximale Dehnung ist größer als 100 %. Bevorzugt ist die Dehnung größer als 200 % (Bestimmung nach DIN 53504).

Die Polyurethan-Schäume können sowohl als Ortschäume beispielsweise zur Abdichtung oder Fixierung von Fenster- und Türzargen (Montageschaum) eingesetzt werden, als auch als Block-oder Formschäume ausgehärtet werden, die in einem weiteren Verarbeitungsschritt verklebt, laminiert oder beschichtet werden können. Ebenfalls denkbar ist die Applikation des Schaums zwischen zwei Substrate zur Produktion von Sandwichpanelen. Ein weiteres Anwendungsgebiet ist die in-situ-Applikation des Schaums zur Herstellung von geschäumten Dichtungen.

Daher ist ein weiterer Gegenstand der Erfindung die Verwendung der erfindungsgemäßen Schäume als Ortsschäume, Block- oder Formschäume.

### Beispiele

Alle Prozentangaben beziehen sich sofern nicht abweichend angegeben auf Gewichtsprozent.

Die Bestimmung der NCO-Gehalte in % wurde über Rücktitration mit 0,1 mol/l Salzsäure nach Reaktion mit Butylamin vorgenommen, Grundlage DIN EN ISO 11909.

Die zur Zeit der Versuchsdurchführung herrschende Umgebungstemperatur von 23°C wird als RT bezeichnet.

### Verwendete Abkürzungen und Einsatzstoffe:

| | |
|---|---|
| PO | Propylenoxid |
| EO | Ethylenoxid |
| DBTL | Dibutylzinndilaurat |
| Tegostab^{®} B 1048 | Polyethersiloxan (Fa. Degussa, Düsseldorf, DE) |
| Aerosil^{®} R 9200 | Flammpyrolytisch hergestellte, hochdisperse Kieselsäure (Fa. Degussa, Düsseldorf, DE) |
| Mesamoll^{®} | Weichmacher auf Basis eines Alkylsulfonsäureesters (Fa. Lanxess, Leverkusen, DE) |

### Herstellung des silanterminierten Prepolymers 1 (STP 1, erfindungsgemäß):

Eine Mischung aus 2003,6 g eines difunktionellen, ethylenoxidhaltigen Polyethers (OH-Zahl 28, Molgewicht 4000 g/mol, Verhältnis PO/EO=6,5 entsprechend 13 Gew% EO), 214,3 g 3-Isocyanatotrimethoxysilan und 133 µl DBTL wurde solange unter Rühren auf 60 °C erwärmt bis der NCO-Gehalt bei 0,0% lag.

### Herstellung des silanterminierten Prepolymers 2 (STP 2, nicht erfindungsgemäß):

Eine Mischung aus 2000 g eines difunktionellen, nicht ethylenoxidhaltigen Polyethers (OH-Zahl 28, Molgewicht 4000 g/mol, 100% PO), 214,3 g 3-Isocyanatotrimethoxysilan und 133 µl DBTL wurde solange unter Rühren auf 60 °C erwärmt bis der NCO-Gehalt bei 0,0% lag.

### Beispiel 1: Herstellung eines Schaums unter Basenkatalyse

117,5 g des STP's 1 und 3,8 g Tegostab^{®} B 1048 wurden in einem Kunststoffbecherglas mit einem Handrührer vermischt und in 10 Min. auf eine Volumen von ca. 300 ml aufgeschäumt. Danach wurden 2,5 g Kalilauge (1,25 mol/L) zugegeben, wonach innerhalb von 20 s die Aushärtung erfolgte. Es wurde ein weißer Schaum erhalten.

### Beispiel 2: Herstellung von Schäumen unter Säurekatalyse

- a): 117,5 g des STP's 1 und 3,8 g Tegostab^{®} B 1048 wurden in einem Kunststoffbecherglas mit einem Handrührer vermischt und in 10 Min. auf eine Volumen von ca. 300 ml aufgeschäumt. Danach wurden 2,5 g einer 5 %igen wässrigen Lösung von p-Toluolsulfonsäure zugegeben, wonach innerhalb von 100 s die Aushärtung erfolgte. Es wurde ein weißer Schaum erhalten.
- b): Der Versuch wie in a) beschrieben wurde mit 2 g einer 20 %igen wässrigen Lösung von p-Toluolsulfonsäure durchgeführt, wobei die Aushärtung zu einem weißen Schaum bereits nach 50 s erfolgte.

### Beispiel 3: Schaum mit Füllstoff und Weichmacher

Mittels eines Dissolvers wurden zunächst 50 g Aerosil^{®} R 9200 in 117,5 g des STP's 1 dispergiert (nahezu transparente Dispersion). Danach wurden 25 g Mesamoll^{®} und 3,8 g Tegostab^{®} B 1048 zugegeben, schließlich wurde die Mischung in einem Kunststoffbecherglas mit einem Handrührer in 10 Min. auf eine Volumen von ca. 300 ml aufgeschäumt. Nach Zugabe von 2,5 g einer 5 %igen wässrigen Lösung von p-Toluolsulfonsäure, wurde innerhalb von 20 s die Aushärtung zu einem weißen Schaum erreicht.

### Vergleichsbeispiel, nicht erfindungsgemäß: Herstellung eines Schaums:

117,5 g des STP's 2 und 3,8 g Tegostab^{®} B 1048 wurden in einem Kunststoffbecherglas mit einem Handrührer, wie in den Beispielen 2 und 3 vermischt. Im Gegensatz zu den vorangegangenen Versuchen wurde kein stabiler Schaum erhalten.

## Patentansprüche

1. Verfahren zur Herstellung von durch Silankondensation härtenden Polyurethan-Schäumen, bei dem man eine Zusammensetzung, die mindestens ein silanterminiertes Polyurethan-Prepolymer enthält,
das erhältlich ist, indem man
A) wenigstens einen Polyether mit einem mittleren Molekulargewicht (Mn) von 2000 bis 8000g/mol, enthaltend 10 bis 30 Gewichts-% EO-Einheiten bezogen auf alle im Polyether enthaltenen Alkylenoxydeinheiten, mit
B) wenigstens einer isocyanat- und alkoxysilangruppenaufweisenden Verbindung der Formel (I) 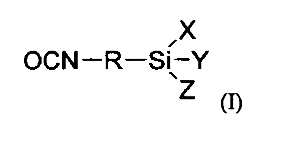 in welcher
X, Y, Z unabhängig voneinander C₁-C₈-Alkyl- oder C₁-C₈-Alkoxyreste sind,
wobei mindestens einer der Reste eine C₁-C₈-Alkoxygruppe ist und
R ein beliebiger wenigstens difunktioneller organischer Rest ist, bevorzugt
ein Alkylenradikal mit 1 bis 8 Kohlenstoffatomen,
umsetzt,
aufschäumt, gegebenenfalls vor, während oder nach dem Aufschäumen auf ein geeignetes Substrat aufträgt und in Anwesenheit von Wasser aushärtet.

2. Verfahren zur Herstellung von durch Silankondensation härtenden Polyurethanschäumen gemäß Anspruch 1, **dadurch gekennzeichnet, dass** der Polyether A) ein zahlenmittleres Molekulargewicht (Mn) von 3000-5000 g/mol aufweist.

3. Verfahren zur Herstellung von durch Silankondensation härtenden Polyurethanschäumen gemäß Anspruch 1 oder 2, **dadurch gekennzeichnet, dass** der Polyether A) 10 bis 20 Gewichts-% Polyethylenoxid und 80 bis 90 Gewichts-% Polypropylenoxid bezogen auf die insgesamt enthaltenen Alkylenoxydeinheiten enthält.

4. Verfahren zur Herstellung von durch Silankondensation härtenden Polyurethanschäumen gemäß einem der Ansprüche 1 bis 3, **dadurch gekennzeichnet, dass** es sich bei den Gruppen X, Y, Z um Methoxy- oder Ethoxygruppen handelt.

5. Verfahren zur Herstellung von durch Silankondensation härtenden Polyurethanschäumen gemäß einem der Ansprüche 1 bis 4, **dadurch gekennzeichnet, dass** es sich bei der isocyanat-und alkoxysilangruppenaufweisenden Verbindung der Formel (I) um Isocyanatopropyltrimethoxysilan oder Isocyanatopropyltriethoxysilan handelt.

6. Polyurethanschäume erhältlich nach einem Verfahren gemäß einem der Ansprüche 1 bis 5.

7. Verwendung der Schäume gemäß Anspruch 6 als Ortsschäume, Block- oder Formschäume.

## Claims

1. Process for producing polyurethane foams that cure via silane condensation, by foaming a composition which comprises at least one silane-terminated polyurethane prepolymer
and which is obtainable by reacting
A) at least one polyether with an average molar mass (Mn) of from 2000 to 8000 g/mol, comprising from 10 to 30% by weight of EO units, based on all of the alkylene oxide units comprised within the polyether, with
B) at least one compound of the formula (I) which has isocyanate groups and alkoxysilane groups 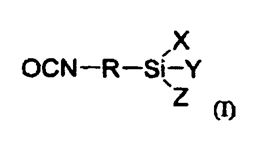 in which
X, Y, Z are mutually independently C₁-C₈-alkyl or C₁-C₈-alkoxy moieties, where at least one of the moieties is a C₁-C₈-alkoxy group and
R is any desired at least difunctional
organic moiety, preferably an alkylene radical having from 1 to 8 carbon atoms,
and applying the mixture, optionally prior to, during or after the foaming process, to a suitable substrate and hardening in the presence of water.

2. Process for producing polyurethane foams according to Claim 1 which cure via silane condensation, **characterized in that** the polyether A) has a number-average molar mass (Mn) of from 3000 to 5000 g/mol.

3. Process for producing polyurethane foams according to Claim 1 or 2 which cure via silane condensation, **characterized in that** the polyether A) comprises from 10 to 20% by weight of polyethylene oxide and from 80 to 90% by weight of polypropylene oxide, based on the entirety of the alkylene oxide units present.

4. Process for producing polyurethane foams according to any of Claims 1 to 3 which cure via silane condensation, **characterized in that** the groups X, Y, Z are methoxy or ethoxy groups.

5. Process for producing polyurethane foams according to any of Claims 1 to 4 which cure via silane condensation, **characterized in that** the compound of the formula (I) which has isocyanate groups and which has alkoxysilane groups is isocyanatopropyltrimethoxysilane or isocyanatopropyltriethoxysilane.

6. Polyurethane foams obtainable by process according to any of Claims 1 to 5.

7. Use of the foams according to Claim 6 as in-situ foams, slab foams or moulded foams.

## Revendications

1. Procédé pour la production de mousses de polyuréthane durcissant par condensation de silanes, dans lequel on transforme en mousse une composition qui contient au moins un prépolymère-polyuréthane à terminaison silane,
qui peut être obtenu par mise en réaction
A) d'au moins un polyéther ayant une masse moléculaire moyenne (Mn) de 2 000 à 8 000 g/mole, contenant 10 à 30 % en poids de motifs OE par rapport à tous les motifs oxyde d'alkylène contenus dans le polyéther, avec
B) au moins un composé comportant des groupes
isocyanate et alcoxysilane, de formule (I) 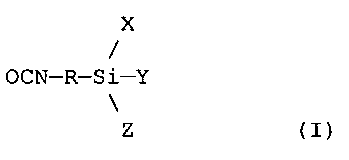 dans laquelle
X, Y, Z représentent, chacun indépendamment,
des radicaux alkyle en C₁-C₈ ou alcoxy en C₁-C₈, au moins l'un des radicaux étant un groupe alcoxy en C₁-C₈ et
R est un radical organique au moins
difonctionnel quelconque, de préférence un radical alkylène ayant de 1 à 8 atomes de carbone,
éventuellement avant, pendant ou après l'expansion on l'applique sur un support approprié et on la fait durcir en présence d'eau.

2. Procédé pour la production de mousses de polyuréthane durcissant par condensation de silanes, selon la revendication 1, **caractérisé en ce que** le polyéther A) présente une masse moléculaire moyenne en nombre (Mn) de 3 000 - 5 000 g/mole.

3. Procédé pour la production de mousses de polyuréthane durcissant par condensation de silanes, selon la revendication 1 ou 2, **caractérisé en ce que** le polyéther A) contient de 10 à 20 % en poids de polyoxyéthylène et de 80 à 90 % en poids de polyoxypropylène, par rapport à l'ensemble des motifs oxyde d'alkylène contenus.

4. Procédé pour la production de mousses de polyuréthane durcissant par condensation de silanes, selon l'une quelconque des revendications 1 à 3, **caractérisé en ce que** les groupes X, Y, Z consistent en des groupes méthoxy ou éthoxy.

5. Procédé pour la production de mousses de polyuréthane durcissant par condensation de silanes, selon l'une quelconque des revendications 1 à 4, **caractérisé en ce que** le composé de formule (I), comportant des groupes isocyanate et alcoxysilane, consiste en isocyanatopropyltriméthoxysilane ou isocyanatopropyltriéthoxysilane.

6. Mousses de polyuréthane pouvant être obtenues conformément à un procédé selon l'une quelconque des revendications 1 à 5.

7. Utilisation des mousses selon la revendication 6, en tant que mousses produites sur place, mousses en blocs ou moulées.
